# EUROPEAN PATENT SPECIFICATION

(11) **EP 3 138 377 B1**
(45) Date of publication and mention of the grant of the patent: **01.08.2018**
(21) Application number: 16175252.2
(22) Date of filing: 20.06.2016
(51) Int. Cl.: A01D 34/66

(54) **LAWN MOWER WITH SELF-CENTERING CONNECTION ARM**
RASENMÄHER MIT SELBSTZENTRIERENDEM VERBINDUNGSARM
TONDEUSE À GAZON ET BRAS DE CONNEXION À CENTRAGE AUTOMATIQUE

(30) Priority: 25.06.2015 IT UB20151660
(43) Date of publication of application: 08.03.2017
(73) Proprietor: Stiga S.p.A. in breve anche St. S.p.A., 31033 Castelfranco Veneto (TV) (IT)
(72) Inventor: JOHANSSON, Soren, 57343 TRANAS (SE); BROVEDANI, Vittorio, 31025 SANTA LUCIA DI PIAVE (TV) (IT); GRAZIOTTO, Stefano, 31033 CASTELFRANCO VENETO (TV) (IT)
(74) Representative: Mittler, Andrea

(56) References cited:
- GB-A- 2 199 225
- JP-A- H08 256 556
- US-B1- 6 341 480
- US-B2- 7 481 036
- US-B2- 7 596 936

## Description

The present invention relates to a lawn mower with a self-centering connection arm.

Lawn mowers with a front cutting plate are a very common type of lawn mower due to their ease of use and due to their maneuverability in various applications.

There are multiple advantages of a front cutting mower, for example they are highly maneuverable because their articulated steering allows complete control of the front wheels and easy maneuvering in small spaces, such as for example between hedges and trees.

Front cutting lawn mowers have better visibility since the cutting plate is positioned at the front of the mower and therefore the operator has complete vision of the cutting surface and such as not to leave any portions of the lawn uncut.

Several different models of a lawn mower with a front cutting plate are already known and described.

GB2199225B describes a removable cutting apparatus for a lawn mower, with a hydraulic piston lifting system. The cutting unit may be connected to the lawn mower by means of two connection rods which are fixed to the frame of the lawn mower by means of a spring. The transmission of the power occurs through a cardan joint. Disadvantageously, the use of a spring to fix the rods to the frame does not make the cutting system entirely stable during use. Moreover, the spring, which has to be handled at each use, may be easy to lose. Another disadvantage is given by the transmission of the power, which is to be connected by means of a cardan joint; this results in a further difficulty for the operator who has to be an expert in using cardan joints.

US7596936B2 describes a lawn mower with a cutting platform suspended below a cover, with a height adjusting mechanism. The platform may be adjusted to various cutting heights by an electric mechanism and hydraulic pistons. The platform is easy to connect and disconnect to/from the lawn mower by means of screws. Disadvantageously, the operator should tighten or loosen the screws at each use to connect or disconnect the cutting plate to/from the lawn mower. This involves the use of external work tools which may add an additional difficulty for the operator. Moreover, the screws may be easy to lose during use.

US7481036B2 describes a lawn mower comprising a removable platform mounted at the front of the lawn mower. A movable support arm allows the platform to switch from a horizontal first position to a vertical second position. To switch from one position to the other, the operator should get off the lawn mower and use pins to secure the movable support. Disadvantageously, the operator should manually connect the cutting plate with pins at each use. The pins are easy to lose during use. Moreover, the operator should get off the lawn mower to perform the connection and disconnection operations of the cutting plate.

JP8256556A describes a lawn mower comprising a front cutting extension connected by means of a support rod and a piston lifting system. The cutting height may be adjusted by means of the lifting system.

US6341480B1 describes a lawn mower comprising a cutting unit connected to the lawn mower by means of a support frame. Said support frame may be lifted and lowered by a lifting mechanism.

Disadvantageously, front cutting lawn mowers require significant maintenance and they especially require intervention by the operator each time the cutting plate is to be coupled to or released from the lawn mower.

A further disadvantage is that the transmission must to be manually connected at each use; this results in a loss of time by the user and also requires the operator to be capable of connecting the plate to the lawn mower.

It is the object of the present invention to have a lawn mower with front cutting plate which is easy to use, does not require intervention by the operator for the connection and disconnection operations of the cutting plate to/from the lawn mower.

It is another object to have a lawn mower with front cutting plate which allows easy cleaning both of the cutting plate and of the lawn mower.

It is a further object to have a lawn mower which does not require excessive and costly maintenance.

It is an additional object of the present invention to have a lawn mower with front cutting plate which does not require the use of small mechanical components for the connection and disconnection operations of the plate; such mechanical components could be easily lost.

According to the invention, such an object is achieved with a lawn mower as disclosed in claim 1.

These and other features of the present invention will become more apparent from the following detailed description of the practical embodiment thereof, shown by way of non-limiting example in the accompanying drawings, in which:
Figure 1 shows a perspective view of a lawn mower with front cutting plate;
Figure 2 shows a perspective bottom view of the lawn mower;
Figure 3 shows a bottom plan view of the lawn mower;
Figure 4 shows a perspective view of the cutting plate;

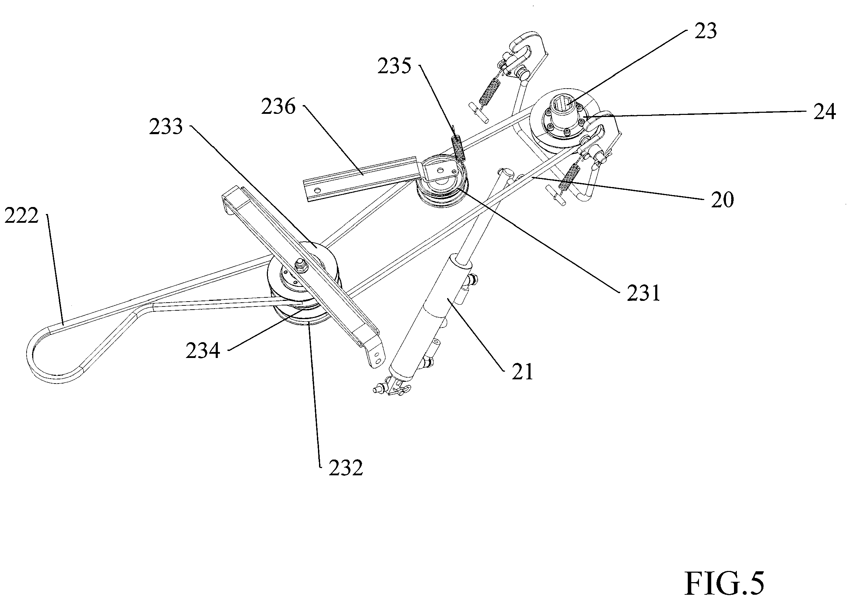

Figure 5 shows a perspective view of an arm of the lawn mower;
Figure 6 shows a perspective view of a blade starter mechanism of the cutting plate;
Figure 7 shows a side view of internal parts of an arm of the lawn mower.

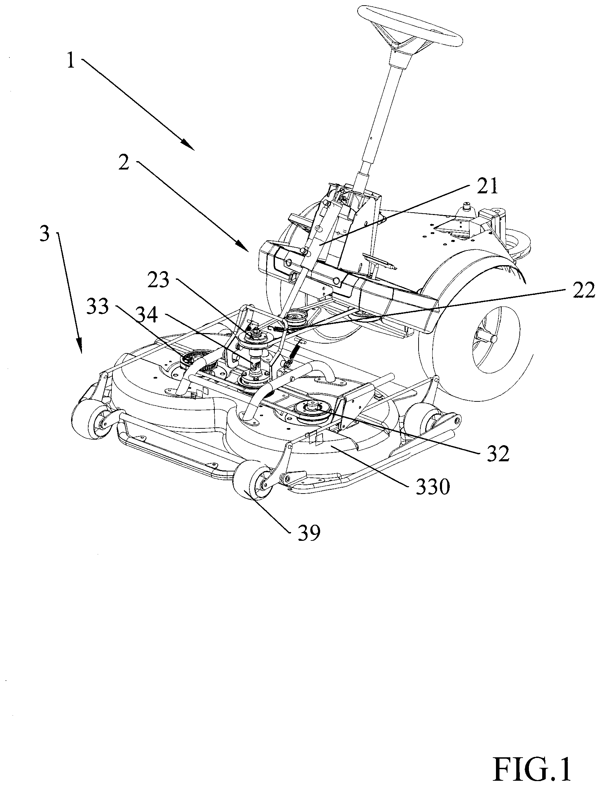

Figure 1 shows a lawn mower 1 comprising a transport unit 2 and a cutting plate 3 which can be assembled in a separable manner.

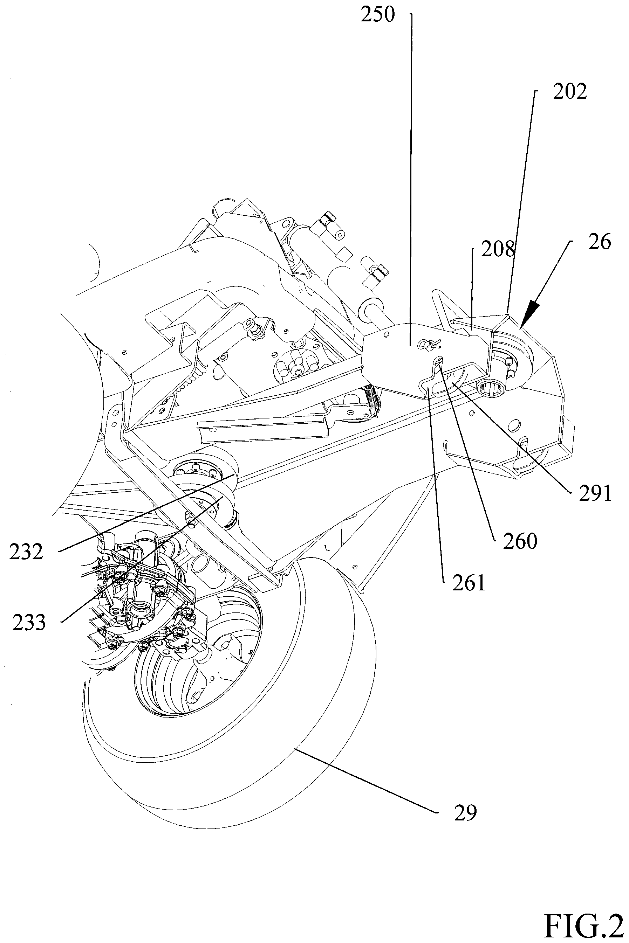

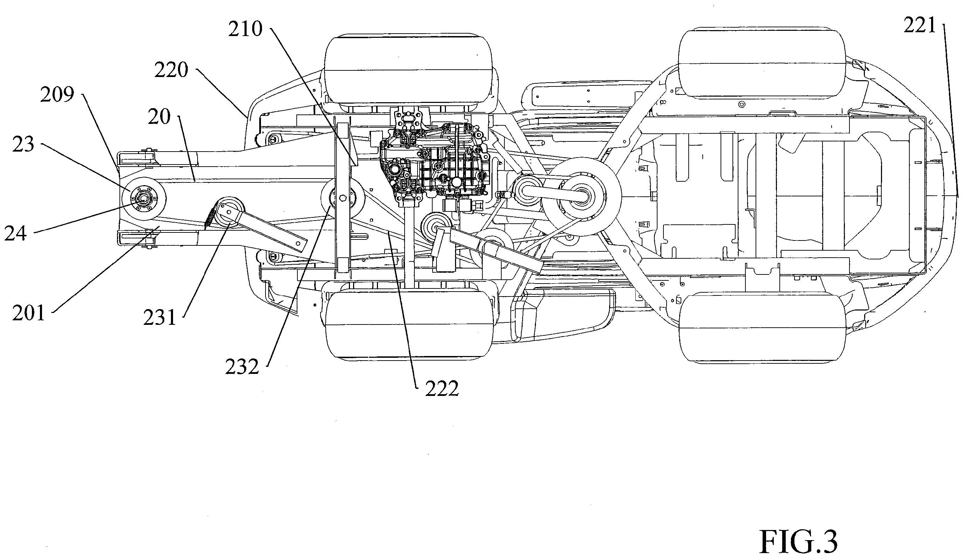

As shown in figures 2 and 3, the transport unit 2 comprises a front portion 220 and a rear portion 221, a frame 200 upheld by four wheels 29 allowing the movement of the transport unit 2 on the ground. The front portion 220 of the transport unit 2 comprises an arm 26 with a flat upper portion 202 and a hollow lower portion 201, a front portion 209 and a rear portion 210.

The rear portion 210 of arm 26 is connected to frame 200 in a movable manner and a piston 21 is connected to the upper portion of arm 26 and to the front portion 220 of the transport unit 2. Arm 26 is positioned in the middle of the front portion 220 of the transport unit 2. Said piston 21 is adapted to lift and lower arm 26 by adjusting the height thereof.

A plurality of pulleys is rotably attached on the lower portion 201 of arm 26, a first pulley 23 is fixed in the front portion 209 of arm 26, and a pair of pulleys, a lower pulley 232 and an upper pulley 233 keyed onto the same shaft 234, are fixed in the rear portion 210 of arm 26.

A tensioner 231 is rotably attached to arm 26 thanks to a support 236 between the first pulley 23 and the pair of pulleys 232 and 233.

A spring 235 is fixed to arm 26 and to tensioner 231 and allows said tensioner 231 to move following the stresses of a second timing belt 20.

The first pulley 23 comprises a joint 24 for the torque transmission, e.g. a cardan joint, which joint is adapted to be connected with a shaft 34, e.g. a cardan shaft, on the cutting plate 3 or any accessory requiring the transmission of power.

A first timing belt 222 transmits the power generated by the motor to the lower pulley 233, causing it to rotate and in turn transmitting the power to the upper pulley 232 by means of shaft 234.

The second timing belt 20 runs between the pulleys 232 and 23. The power is transmitted from the first timing belt 222 to the second timing belt 20 thanks to the pulleys 232 and 233.

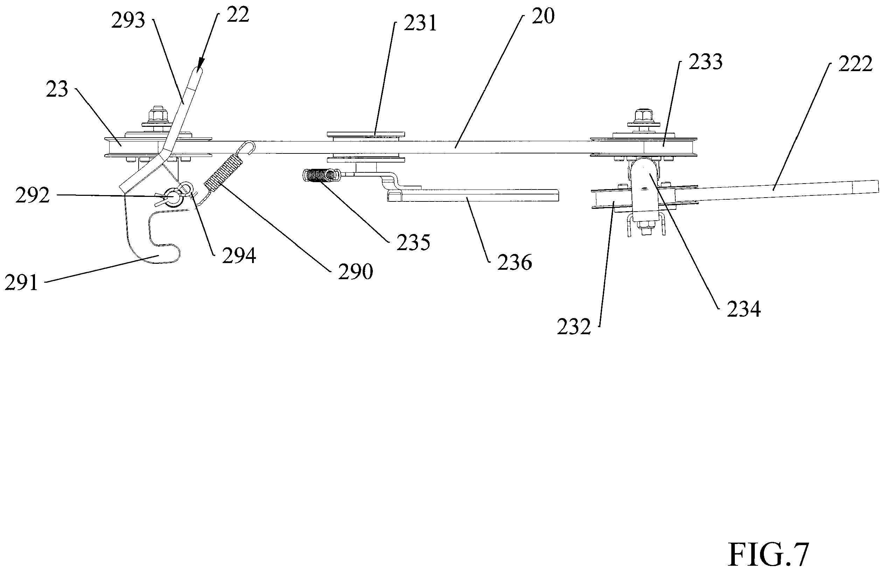

Two hooks 22 (figures 2 and 7) are connected to an edge 208 of arm 26 in the front portion 209 of arm 26. The two hooks 22 are connected to each other by means of a tubular portion 293 passing above the upper portion 202 of arm 26.

The two hooks 22 are connected to arm 26 by means of a pin 292 and two stops 294 arranged at the outer ends of pin 292. Two return elements 290, e.g. springs, are fixed to the edge 208 of arm 26 and to the two hooks 22.

The hooks 22 are adapted to switch from a resting position in which the return elements 290 are unloaded, to a tensioned position in which the return elements 290 are in traction and in which the hooks 22 rotate toward the front portion 209 of arm 26.

A cover 250 is fixed to edge 208 of arm 26, in the front portion 209 of arm 26. Two notches 260 on cover 250 create, with the hooks 22, a sliding guide 261 for the pins 310 of the cutting plate 3.

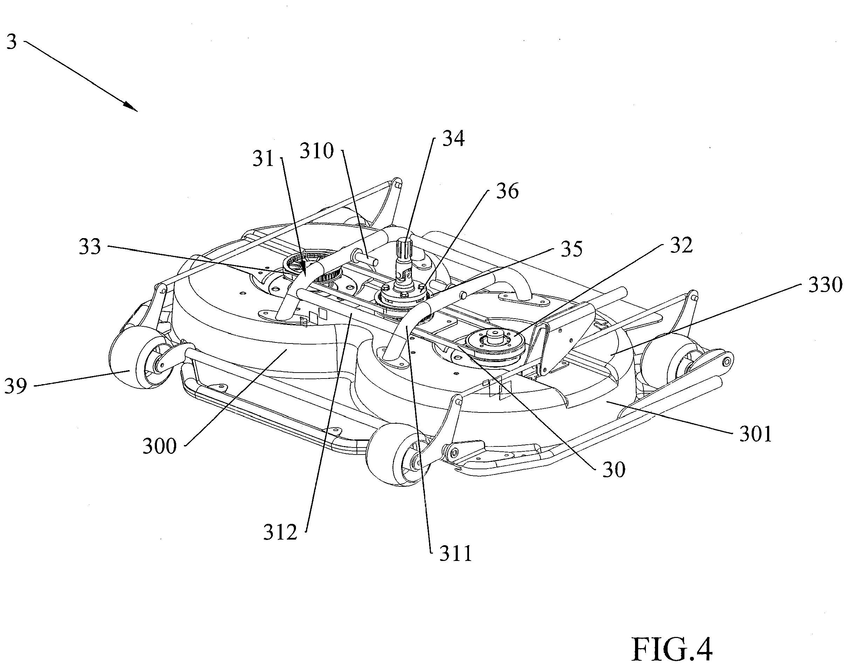

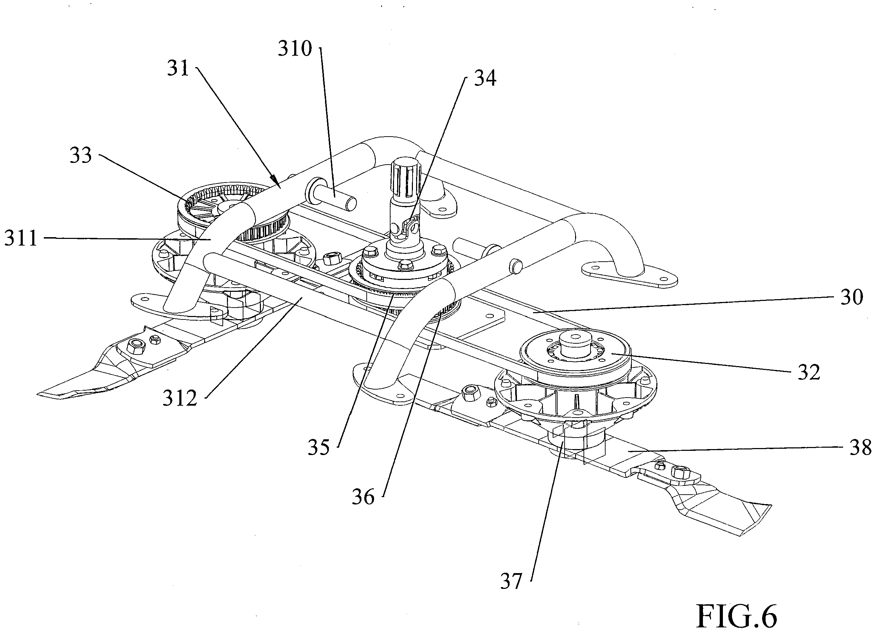

As shown in figures 4 and 6, the cutting plate 3 comprises a frame 300 upheld by a plurality of wheels 39. Frame 300 comprises a housing 301 suitable for containing the cutting blades 38. A shaft 34 is rotably attached to the middle of housing 301, at the base of which shaft two central pulleys 35 and 36 are connected, keyed onto the same shaft. Two side pulleys 32 and 33 are rotably attached on the side of housing 301 of the cutting plate 3. The two central pulleys 35 and 36 are each connected with a side pulley 32 and 33 by means of a timing belt 30.

The side pulleys 32 and 33 are both connected with the cutting blade 38 by means of a joint 37 which crosses frame 300, thus transmitting the power to the cutting blade 38.

A guide frame 31 is fixed on an upper portion 330 of frame 300, opposite to the portion where the blades 38 are accommodated, the guide frame being adapted to guide arm 26 during the connection operations of the cutting plate 3 with the transport unit 2.

The guide frame 31 comprises two tubular portions 311 fixed to frame 300 which extend along the shortest side of housing 301. Two supports 312 connect the two tubular portions 311 of the guide frame 31 to each other. The tubular portions 311 comprise two pins 310 projecting toward the inside of the guide frame 31.

The tubular portions 311 and the two supports 312 are adapted to guide arm 26 during the connection operations between the cutting plate 3 and the transport unit 2.

The cutting plate 3 is suitable for being connected to the transport unit 2 through arm 26, namely joint 24 of the transport unit 2 is suitable for accommodating shaft 34.

An operator may remain on the transport unit 2 to connect the cutting plate 3 with the transport unit 2 by raising arm 26 by means of piston 21.

Once the cutting plate 3 has been reached, the operator actuates the control to lower arm 26 by means of piston 21. The guide frame 31 allows the self-centering of the cutting plate 3 with respect to the transport unit 2.

An end portion 291 of the two hooks 22 comes into contact with the pins 310 of the guide frame 31 of the cutting plate 3; the contact with the pins 310 is adapted to cause the hooks 22 to rotate toward the front part 209 of arm 26 (clockwise looking at figure 7), the pins entering guide 261 and allowing the lowering of arm 26. The hooks 22 are returned to the resting position by the springs 290 and couple with the pins 310, thus fixing the cutting plate 3 to arm 26.

Following the lowering of arm 26, joint 24 is coupled with shaft 34 of the cutting plate 3.

Thereby, the cutting plate 3 is connected to the transport unit 2 and the cutting function is controlled by the operator on the transport unit 2.

The position of the cutting plate 3 with respect to the transport unit 2 is always optimal, thanks to the self-centering connection of the transport unit 2 with arm 26, arm 26 being fixed to the middle of the front portion 220 of the transport unit 2 and shaft 34 being rotably attached to the center of the cutting plate 3.

When the transport unit 2 is connected with the cutting plate 3, it transmits the power due to the coupling of the joint 24 with shaft 34 of the cutting plate 3. Shaft 34 of the cutting plate 3 in turn transmits the power due to the pair of central pulleys 35 and 36 rotably attached to the base of shaft 34 and connected to the side pulleys 32 and 33 by means of the timing belts 30. The side pulleys 32 and 33 allow the cutting blades 38 to rotate thanks to two joints 37 which transmit them the power.

The cutting plate 3 is adapted to switch from a cutting position, with the cutting plane parallel to the ground and with the wheels 39 resting on the ground, to a tilted position to allow the cleaning of the cutting plate. The tilted position is reached due to piston 21, which may lift arm 26 and therefore also the cutting plate 3 connected to arm 26.

The operation of disconnecting the cutting plate 3 from the transport unit 2 occurs manually, the connection and release system is controlled from the operator position by means of a pedal control, manual lever or actuator.

Such a control interacts by moving the tubular portion 293 of hook 22 so as to uncouple the hooks 22 with the pins 310 of the cutting plate 3. Arm 26 may be lifted by means of piston 21 by uncoupling shaft 34 of the cutting plate from joint 24 of the transport unit 2.

Advantageously, this system allows the operator to connect the transport unit to the cutting plate without the need to manually connect the transmission by connecting timing belts to pulleys.

A further advantage is that the disconnection of the cutting plate 3 from the transport unit occurs with a simple operation by the operator.

Another advantage is that the operator may connect the cutting plate to the transport unit without using any additional tools.

A further advantage is that once the cutting plate has been connected to the transport unit, it is firmly secured to the transport unit.

An additional advantage is that the position of the cutting plate with respect to the transport unit is always optimal, due to the self-centering connection of the transport unit with the arm.

A further advantage is that the operator may connect the transport unit to the cutting plate, without needing to get off the transport unit.

Another advantage is that the connection between the transport unit and the cutting plate does not occur by using small mechanical components such as springs or screws, thus avoiding the possibility of losing said mechanical components.

## Claims

1. Lawn mower (1) comprising a transport unit (2) and a cutting plate (3) separably assembled, said transport unit (2) includes an arm (26) for coupling to the cutting plate (3), **characterized in that** said arm (26) comprises at least one pulley (23) positioned in a front portion (209) of the arm (26) provided with a joint (24) for torque transmission, the cutting plate (3) comprises a shaft (34) suitable to be coupled with the joint (24) of the transport unit (2) and suitable for transmitting in turn the torque to at least one blade (38),
a guide frame (31) is fixed in an upper portion (330) of the cutting plate (3) and is adapted to guide the arm (26) during assembly of the cutting plate (3) with the transport unit (2),
some hooks (22) are provided in a front portion (209) of the arm (26), said hooks (22) being connected to the arm (26) by means of return elements (290),
the guide frame (31) of the cutting plate (3) comprises pins (310) suitable for mating with the hooks (22).

2. Lawn mower (1) according to claim 1, **characterized in that** the hooks (22) on the arm (26) come into contact with the pins (310) of the guide frame (31) of the cutting plate (3), the contact with the pins (310) being arranged to rotate the hooks (22) towards the front portion (209) of the arm (26) extending the return elements (290) and allowing the lowering of the arm (26) toward the cutting plate (3), said hooks (22) being retrieved from the return elements (290) mating with the pins (310) and securing the cutting plate (3) to the arm (26).

3. Lawn mower (1) according to any one of the preceding claims, **characterized in that** a cover (250) is fixed to an edge (208) of the arm (26) in the front portion (209) of the arm (26), two notches (260) on the cover (250) creating with the hooks (22) a sliding guide (261) for the pins (310) of the cutting plate (3).

4. Lawn mower (1) according to any one of the preceding claims, **characterized in that** the arm (26) of the transport unit (2) is connected with a rear portion (210) of the arm (26) to a frame (200) of the transport unit (2) in a movable manner and a piston (21) is fixed to the upper portion (202) of the arm (26) and a front portion (220) of the transport unit, said piston (21) is able to lift and lower the arm (26) by adjusting the height of the arm (26) and the cutting deck (3).

5. Lawn mower (1) according to any one of the preceding claims, **characterized in that** the arm (26) is fixed to the center of the front portion of the transport unit (2) and the shaft (34) of the cutting plate (3) is rotably attached to the center of the frame (300) of the cutting plate (3) self-centering the cutting plate (3) with respect to the transport unit (2) as a result of their connection.

6. Lawn mower (1) according to any one of the preceding claims, **characterized in that** the base of the shaft (34) of the cutting plate (3) are connected to the two central pulleys (35, 36) keyed on the same shaft, two lateral pulleys (32, 33) are each in connection with one of the central pulleys (35, 36) via a timing belt (30), said lateral pulleys (32, 33) are both in connection with a cutting blade (38) via joints (37) crossing a frame (300) of the cutting plate (3) transmitting the power to the cutting blades (38).

## Patentansprüche

1. Rasenmäher (1) mit einer Transporteinheit (2) und einer Schneidplatte (3), die trennbar aneinander montiert sind, wobei die Transporteinheit (2) einen Arm (26) zum Koppeln mit der Schneidplatte (3) aufweist,
**dadurch gekennzeichnet,**
**dass** der Arm (26) mindestens eine Riemenscheibe (23) aufweist, die in einem vorderen Bereich (209) des Arms (26) angeordnet ist, der ein Gelenk (24) zur Drehmomentübertragung aufweist,
**dass** die Schneidplatte (3) eine Welle (34) aufweist, die zur Kopplung mit dem Gelenk (24) der Transporteinheit (2) geeignet ist, um wiederum das Drehmoment zu mindestens einem Messer (38) zu übertragen,
**dass** ein Führungsrahmen (31) in einem oberen Bereich (330) der Schneidplatte (3) festgelegt und dazu ausgelegt ist, den Arm (26) während der Montage der Schneidplatte (3) an der Transporteinheit (2) zu führen,
**dass** einige Haken (22) in einem vorderen Bereich (209) des Arms (26) vorgesehen sind, wobei die Haken (22) mit dem Arm (26) mittels Rückstellelementen (290) verbunden sind,
**dass** der Führungsrahmen (31) der Schneidplatte (3) Stifte (310) aufweist, die zum Zusammenwirken mit den Haken (22) geeignet sind.

2. Rasenmäher (1) nach Anspruch 1,
**dadurch gekennzeichnet, dass** die Haken (22) an dem Arm (26) mit den Stiften (310) des Führungsrahmens (31) der Schneidplatte (3) in Kontakt kommen, wobei der Kontakt mit den Stiften (310) dazu ausgebildet ist, die Haken (22) in Richtung des vorderen Bereichs (209) des Arms (26) zu drehen, wobei die Rückstellelemente (290) gedehnt werden und das Absenken des Arms (26) in Richtung auf die Schneidplatte (3) ermöglicht wird, wobei die Haken (22) von den mit den Stiften (310) zusammenwirkenden Rückstellelementen (290) zurückgeholt werden und die Schneidplatte (3) an dem Arm (26) befestigt wird.

3. Rasenmäher (1) nach einem der vorhergehenden Ansprüche,
**dadurch gekennzeichnet, dass** eine Abdeckung (250) an einem Rand (208) des Arms (26) in dem vorderen Bereich (209) des Arms (26) befestigt ist, wobei zwei Aussparungen (260) an der Abdeckung (250) zusammen mit den Haken (22) eine Gleitführung (261) für die Stifte (310) der Schneidplatte (3) bilden.

4. Rasenmäher (1) nach einem der vorhergehenden Ansprüche,
**dadurch gekennzeichnet, dass** der Arm (26) der Transporteinheit (2) an einem hinteren Bereich (210) des Arms (26) mit einem Rahmen (200) der Transporteinheit (2) in beweglicher Weise verbunden ist und ein Kolben (21) an dem oberen Bereich (202) des Arms (26) und einem vorderen Bereich (220) der Transporteinheit festgelegt ist, wobei der Kolben (21) in der Lage ist, den Arm (26) durch Einstellen der Höhe des Arms (26) und des Mähwerks (3) anzuheben und abzusenken.

5. Rasenmäher (1) nach einem der vorhergehenden Ansprüche,
**dadurch gekennzeichnet, dass** der Arm (26) an dem Zentrum des vorderen Bereichs der Transporteinheit (2) festgelegt ist und die Welle (34) der Schneidplatte (3) an dem Zentrum des Rahmens (300) der Schneidplatte (3) drehbar angebracht ist, wobei sich die Schneidplatte (3) in Bezug auf die Transporteinheit (2) infolge der Verbindung derselben selbst zentriert.

6. Rasenmäher (1) nach einem der vorhergehenden Ansprüche,
**dadurch gekennzeichnet, dass** die Basis der Welle (34) der Schneidplatte (3) mit den beiden zentralen Riemenscheiben (35, 36) verbunden ist, die auf derselben Welle verkeilt sind, dass jeweils zwei seitliche Riemenscheiben (32, 33) mit jeweils einer der zentralen Riemenscheiben (35, 36) über einen Zahnriemen (30) in Verbindung stehen, wobei die seitlichen Riemenscheiben (32, 33) beide mit einem Schneidmesser (38) in Verbindung stehen, und zwar über Gelenke (37), die einen Rahmen (300) der Schneidplatte (3) kreuzen und die Kraft auf die Schneidmesser (38) übertragen.

## Revendications

1. Tondeuse (1) comprenant une unité de transport (2) et une plaque de coupe (3) assemblée séparément, ladite unité de transport (2) comprend un bras (26) pour se coupler à la plaque de coupe (3), **caractérisée en ce que** :
ledit bras (26) comprend au moins une poulie (23) positionnée dans une partie avant (209) du bras (26) prévu avec un joint (24) pour la transmission de couple, la plaque de coupe (3) comprend un arbre (34) approprié pour être couplé avec le joint (24) de l'unité de transport (2) et approprié pour transmettre à son tour le couple à au moins une lame (38),
un bâti de guidage (31) est fixé dans une partie supérieure (330) de la plaque de coupe (3) et est adapté pour guider le bras (26) pendant l'assemblage de la plaque de coupe (3) avec l'unité de transport (2),
quelques crochets (22) sont prévus dans une partie avant (209) du bras (26), lesdits crochets (22) étant raccordés au bras (26) au moyen d'éléments de rappel (290),
le bâti de guidage (31) de la plaque de coupe (3) comprend des broches (310) appropriées pour se coupler avec les crochets (22).

2. Tondeuse (1) selon la revendication 1, **caractérisée en ce que** les crochets (22) sur le bras (26) viennent en contact avec les broches (310) du bâti de guidage (31) de la plaque de coupe (3), le contact avec les broches (310) étant agencé pour faire tourner les crochets (22) vers la partie avant (209) du bras (26) étendant les éléments de rappel (290) et permettant l'abaissement du bras (26) vers la plaque de coupe (3), lesdits crochets (22) étant récupérés des éléments de rappel (290) se couplant avec les broches (310) et fixant la plaque de coupe (3) au bras (26).

3. Tondeuse (1) selon l'une quelconque des revendications précédentes, **caractérisée en ce qu'**un couvercle (250) est fixé sur un bord (208) du bras (26) dans la partie avant (209) du bras (26), deux encoches (260) sur le couvercle (250) créant, avec les crochets (22), un guide coulissant (261) pour les broches (310) de la plaque de coupe (3).

4. Tondeuse (1) selon l'une quelconque des revendications précédentes, **caractérisée en ce que** le bras (26) de l'unité de transport (2) est raccordé avec une partie arrière (210) du bras (26) à un bâti (200) de l'unité de transport (2) d'une manière mobile, et un piston (21) est fixé à la partie supérieure (202) du bras (26) et une partie avant (220) de l'unité de transport, ledit piston (21) peut lever et abaisser le bras (26) en ajustant la hauteur du bras (26) et du pont de coupe (3).

5. Tondeuse (1) selon l'une quelconque des revendications précédentes, **caractérisée en ce que** le bras (26) est fixé sur le centre de la partie avant de l'unité de transport (2) et l'arbre (34) de la plaque de coupe (3) est fixé, de manière rotative, au centre du bâti (300) de la plaque de coupe (3) auto-centrant la plaque de coupe (3) par rapport à l'unité de transport (2) suite à leur raccordement.

6. Tondeuse (1) selon l'une quelconque des revendications précédentes, **caractérisée en ce que** la base de l'arbre (34) de la plaque de coupe (3) est raccordée aux deux poulies centrales (35, 36) clavetées sur le même arbre, deux poulies latérales (32, 33) sont chacune en raccordement avec l'une des poulies centrales (35, 36) via une courroie de distribution (30), lesdites poulies latérales (32, 33) sont toutes deux en raccordement avec une lame de coupe (38) via des joints (37) traversant un bâti (300) de la plaque de coupe (3) transmettant la puissance aux lames de coupe (38).
